# EUROPEAN PATENT SPECIFICATION

(11) **EP 1 358 794 B1**
(45) Date of publication and mention of the grant of the patent: **13.12.2006**
(21) Application number: 03251020.8
(22) Date of filing: 20.02.2003
(51) Int. Cl.: A01K 39/01

(54) **A bird feeder**
Futterspender für vögel
Mangeoire pour oiseaux

(30) Priority: 30.04.2002 GB 0209829
(43) Date of publication of application: 05.11.2003
(73) Proprietor: Gardman Limited, Spalding, Lincolnshire PE12 6QD (GB)
(72) Inventor: Natar, Paris, Milton Keynes, Bucks. MK6 3EZ (GB)
(74) Representative: Chave, Lynne Fiona

(56) References cited:
- GB-A- 410 220
- US-A- 2 770 220
- US-A- 4 434 745
- US-A- 5 826 541

## Description

The present invention relates to an animal feeding device, particularly but not exclusively to a feeding device for feeding birds.

Bird feeding devices are available in many shapes and forms. A feed stuff that has become particularly popular is a so called feeder ball. The feeder ball comprises netting which contains a feed stuff in the form of a fat substance comprising embedded seeds, which is moulded into the shape of a ball.

Various devices have been developed to allow birds easy access to the feeder ball. A common device for retaining a feeder ball comprises a helical spring wherein the feed stuff is retained inside the spring. To locate the feeder ball within the spring the windings are pulled apart. This device has the disadvantage that it requires skill to locate the feed ball inside the spring whilst pulling the windings apart. Furthermore, the helical spring feeder devices are expensive to manufacture.

There is described in US 2,770,220 a bird feeder according to the pre-characterising portion of claim 1 in which an open mesh wire basket is provided for containing feed for birds, having a upper ring member to which holds the vertical wires, forming part of the mesh, in a fixed relationship.

It is therefore desirable to provide an improved bird feeder which addresses the above described problems; and/or which offers improvements generally.

According to the present invention, there is provided a bird feeder as claimed in the accompanying claims. In an embodiment, the resilient members are adapted to form a feed stuff containing space, and a retaining member for retaining the resilient members in a feed stuff retaining position, the retaining member being adapted to release one or more of said resilient members for providing feed stuff in said feed stuff containing space, wherein the resilient members form gaps which extend approximately vertically along the feed stuff containing space to allow birds external access to the feed stuff containing space.

The releasable retaining member allows easy access to the feed stuff containing space so that a user can conveniently place any feed stuff inside the bird feeder.

In another embodiment, the feed stuff containing space comprises approximately vertically extending apertures to allow birds access to the feed stuff within the space. The vertically extending apertures are formed by one or more resilient members. In this way, birds have unobstructed access to the feed stuff, whilst the resilient members retain the feed stuff inside the feed stuff containing space. Also, the vertically extending gaps are more aesthetically pleasing than conventional grid-shaped wiring.

The retaining member may comprise a mounting member in the form of a hook. In this way, the bird feeder can be mounted on any branch, or on any other suitable object in the garden environment.

In another embodiment of the invention, each resilient member may comprise an attachment member for attaching the resilient member to the retaining member. The attachment member may be in the form of hook. The retaining member may be in the form of a ring or loop.

In yet another embodiment of the invention the bird feeder comprises a wire material. The wire material may be of a single size diameter. Each resilient member may be formed from a single continuous piece of wire material. In another embodiment four resilient members may be made from a single integral piece of wire material. Two resilient members may also be joined to form the attachment member. In this way, a bird feeder is manufactured efficiently and economically.

In yet another embodiment of the invention, the resilient members may form a feed stuff holder in an approximate "tear drop" shape. This shape is widely considered aesthetically pleasing.

In an embodiment of the invention the bird feeder comprises essentially two parts, a holder member comprising resilient members which form the feed stuff containing space and a retaining member for retaining the resilient members in a feed stuff containing position and for releasing the resilient members to provide feed stuff in said feed stuff containing space. Both the resilient members and the retaining member may be manufactured from metal wiring of a single diameter. This greatly reduces material costs and simplifies production of the bird feeder. This results in reduced manufacturing costs of the product.

The bird feeder is preferably coated in a plastic coating which prevents weathering of the feeder and also prevents the metal wiring from rusting. The drop-like shape of the resilient members enables birds to conveniently access the feed stuff inside the bird feeder. The shape of the bird feeder also allows different feed stuffs to be located inside the bird feeder such as peanuts, seed balls as herein before described and other suitable feed stuffs.

The invention will now be described by way of example only and with reference to the accompanying drawings in which:

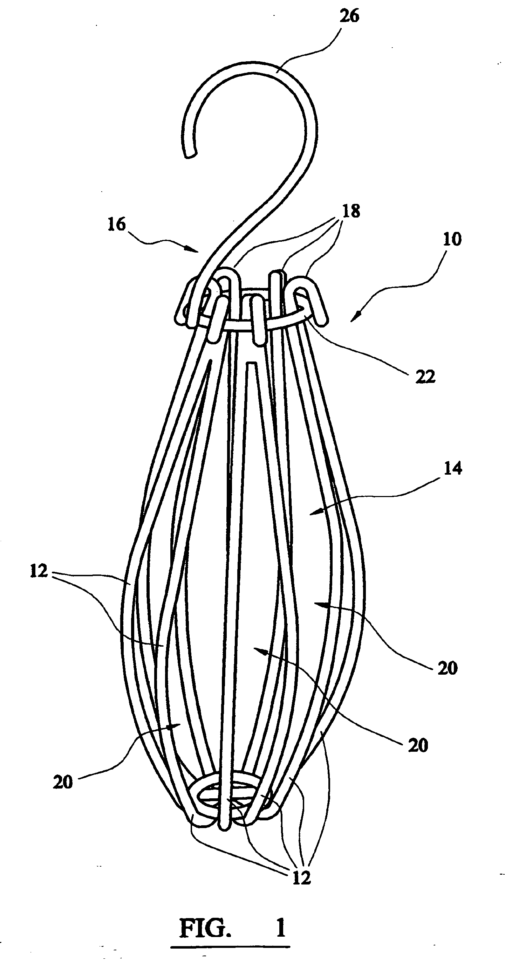

Figure 1 presents a diagrammatic perspective view of a bird feeder according to an embodiment of the invention.

The bird feeder 10 comprises resilient members 12 which are adapted to form a feed stuff containing space 14. The feeder 10 further comprises a retaining member 16 for retaining the resilient members in a feed stuff retaining position, as shown in Figure 1.

The retaining member 16 is adapted to release one or more of said resilient members 12 to provide feed stuff in the feed stuff containing space 14. The resilient members 12 extend approximately vertically so as to form gaps 20 which allow birds external access to the feed stuff containing space.

Each pair of resilient members 12 is conjoined to form an attachment member for attaching the resilient member 12 to the retaining member 16. The attachment member is in the form of a hook 18 which engages with the ring 22 of the retaining member 16. The retaining member 16 further comprises a mounting hook 26 for mounting the feeder on any suitable object.

In use, the attachment members 18 are disconnected from the retaining member 16. The resilient members 12 are then moved outwards so as to allow access to the feed stuff containing space 14. The feed stuff is located within space 14 and the retaining member 16 is slid over the hooks 18.

The retaining member 16 is then moved upwards again so that the hooks of the resilient members 12 attach to the releasable retaining member 16. The bird feeder is mounted by means of the hook 20 to any suitable object such as a branch or similar. After mounting the birds can access the feed stuff containing space 14 via the gaps 20.

## Claims

1. A bird feeder (10) comprising resilient members (12) adapted to form a feed stuff containing space (14) for locating feed inside the feeder, and a retaining member (16) for retaining the resilient members (12)in a feed stuff retaining position, wherein the resilient members (12) form gaps (20) which extend approximately vertically along the feed stuff containing space(14) to allow birds external access to the feed stuff containing space (14); and **characterised in that** the retaining member (16) is adapted to release one or more of said resilient members (12) for providing feed stuff in said feed stuff containing space (14).

2. A bird feeder according to claim 1, wherein the retaining member (16) comprises means (26) for mounting the bird feeder to a suitable object such as a tree or the live.

3. A bird feeder according to any of the preceding claims, wherein the bird feeder comprises metal wire material.

4. A bird feeder according to claim 3, wherein four resilient members are formed from a continuous wire material.

5. A bird feeder according to any of the preceding claims, wherein the resilient members form a holder for holding feed stuff, the holder comprising a base, the base being formed by interconnected resilient members.

6. A bird feeder according to any of the preceding claims, wherein a resilient member (12) comprises an attachment member adapted to engage with the retaining member (16).

7. A bird feeder according claim 6, wherein the attachment member comprises a hook (18) which engages with a loop shaped member (12) of said retaining member (16).

8. A bird feed according to claim 6 or 7, wherein each pair of resilient members are interconnected to form an attachment member.

## Patentansprüche

1. Futterspender (10) für Vögel, der elastische Elemente (12), die so angepasst sind, um einen Futtermittel aufnehmenden Raum (14) zum Anordnen von Futter innerhalb des Futterspenders zu bilden, und ein Halteelement (16), um die elastischen Elemente (12) in einer Futtermittel aufnehmenden Position zurückzuhalten, aufweist, wobei die elastischen Elemente (12) Zwischenräume (20) bilden, die sich ungefähr vertikal entlang des Futtermittel-Aufnahmeraums (14) erstrecken, um Vögeln einen Zugriff von außen auf den das Futtermittel enthaltenden Raum (14) zu ermöglichen; und **dadurch gekennzeichnet, dass** das Rückhalteelement (16) so angepasst ist, um eines oder mehrere der elastischen Element(e) (12) freizugeben, um Futtermittel in den Futtermittel aufnehmenden Raum (14) einzugeben.

2. Futterspender für Vögel nach Anspruch 1, wobei das Rückhalteelement (16) Mittel (26) aufweist, um den Futterspender an einem geeigneten Objekt, wie beispielsweise einem Baum, oder dergleichen, zu befestigen.

3. Futterspender für Vögel nach einem der vorhergehenden Ansprüche, wobei der Futterspender für Vögel Metalldrahtmaterial aufweist.

4. Futterspender für Vögel nach Anspruch 3, wobei vier elastische Elemente aus einem fortlaufenden Drahtmaterial gebildet sind.

5. Futterspender für Vögel nach einem der vorhergehenden Ansprüche, wobei die elastischen Elemente einen Halter zum Halten von Futtermittel bilden, wobei der Halter eine Basis aufweist, wobei die Basis durch miteinander verbundene, elastische Elemente gebildet ist.

6. Futterspender für Vögel nach einem der vorhergehenden Ansprüche, wobei ein elastisches Element (12) ein Befestigungselement aufweist, das so angepasst ist, um in das Rückhalteelement (16) einzugreifen.

7. Futterspender für Vögel nach Anspruch 6, wobei das Befestigungselement einen Haken (18) aufweist, der in ein schlaufenförmiges Element (12) des Rückhaltelements (16) eingreift.

8. Futterspender für ViSgel nach Anspruch 6 oder 7, wobei jedes Paar der elastischen Elemente miteinander verbunden ist, um ein Befestigungselement zu bilden.

## Revendications

1. Mangeoire pour oiseaux (10) comprenant des éléments élastiques (12) adaptés pour former un espace (14) de réception d'aliments pour placer de la nourriture dans la mangeoire, et un élément de maintien (16) pour maintenir les éléments élastiques (12) dans une position de maintien d'aliments, dans laquelle les éléments élastiques (12) forment des interstices (20) qui s'étendent de façon approximativement verticale le long de l'espace (14) de réception d'aliments pour permettre aux oiseaux d'accéder de l'extérieur à l'espace (14) de réception d'aliments, et **caractérisée en ce que** l'élément de maintien (16) est adapté pour libérer un ou plusieurs desdits éléments élastiques (12) pour introduire les aliments dans ledit espace (14) de réception d'aliments.

2. Mangeoire pour oiseaux selon la revendication 1, dans laquelle l'élément de retenue (16) comprend des moyens (26) pour monter la mangeoire pour oiseaux sur un objet approprié, comme un tronc ou analogue.

3. Mangeoire pour oiseaux selon l'une quelconque des revendications précédentes, dans laquelle la mangeoire pour oiseaux comprend un matériau en fil métallique.

4. Mangeoire pour oiseaux selon la revendication 3, dans laquelle quatre éléments élastiques sont formés dans un matériau en fil continu.

5. Mangeoire pour oiseaux selon l'une quelconque des revendications précédentes, dans laquelle les éléments élastiques forment un support pour tenir des aliments, le support comprenant une base, la base étant formée par des éléments élastiques reliés entre eux.

6. Mangeoire pour oiseaux selon l'une quelconque des revendications précédentes, dans laquelle un élément élastique (12) comprend un élément de fixation adapté pour se mettre en prise avec l'élément de maintien (16).

7. Mangeoire pour oiseaux selon la revendication 6, dans laquelle l'élément de fixation comprend un crochet (18) qui se met en prise avec un élément (12) en forme de boucle dudit élément de maintien (16).

8. Mangeoire pour oiseaux selon la revendication 6 ou 7, dans laquelle chaque paire d'éléments élastiques est reliée entre eux pour former un élément de fixation.
